# EUROPEAN PATENT SPECIFICATION

(11) **EP 1 886 835 B1**
(45) Date of publication and mention of the grant of the patent: **12.08.2015**
(21) Application number: 06460042.2
(22) Date of filing: 24.11.2006
(51) Int. Cl.: B42D 25/00

(54) **Personal security document**
Persönliches Sicherheitsdokument
Document de sécurité personnelle

(30) Priority: 10.07.2006 PL 38015806
(43) Date of publication of application: 13.02.2008
(73) Proprietor: Polska Wytwornia Papierow Wartosciowych S.A., 00-222 Warszawa (PL)
(72) Inventor: Leszczynska-Ambroziewicz, Ewa, 05-200 Wolomin (PL); Nowakowski, Dariusz, 27-530 Ozarow (PL); Pawlak, Andrzej, 02-791 Warszawa (PL)
(74) Representative: Pawlowski, Adam

(56) References cited:
- EP-A- 0 775 589
- WO-A-01/85451
- WO-A-96/31346
- WO-A-2004/104779
- US-A- 5 261 987
- US-A- 5 380 695

## Description

The invention is a personal security document, like for instance an ID document or driving licence, with a layered plastic structure.

In the solutions used so far, multi-colour personalisation is obtained on the external surface of the document with the application of all known printing technologies. Afterwards, personalisation is secured with film. Those solutions have the disadvantage that the data may be modified relatively easily to falsify such document as the structure remains untouched and placement of another film is relatively easy.

The application of PCT Np. WO04/07400 refers to ID documents in the form of laminates made of plastic layers melted with each other. examples of the materials are PVC, polycarbonate and polyester. The laminate contains also an external layer onto which document holder data are recorded with a laser beam. The layers are melted and laminated with each other at temperature slightly above the softening point. Thus a uniform product is created that may not be separated without visible traces.

For best durability, the documents are made of polycarbonate. Personalisation of such documents with a laser beam on the external layer is known from the Polish patent No. 186494. The patent describes a personalised passport page made up of several laminated polycarbonate layers. One layer contains 0.4 % of carbon and with the application of a laser beam - a dark colour emerges with the personalised data of passport holder.

This known solution of personalisation with a laser beam allows only for one-colour personalisation of documents made of polycarbonate.

A number of personal security documents are known, in the form of a laminate of several layers, wherein on the internal side of the external layer or on an internal layer (6) there is a personalisation (2) made and at least in one direction all the layers between personalisation (2) and the external side of the document are transparent. Such personal security documents are known from the following: a PCT patent application No. WO2004/104779, a European patent application No. EP0775589, a PCT patent application No. WO01/85451, a US patent No. US5261987, a PCT patent application No. WO96/31346. However, none of these documents discloses a personalization made with multi-colour solvent inkjet print. Moreover, not all layers of these personal security documents are made of polycarbonate.

The goal of the invention is a solution providing for production of a secure document with multi-colour personalization inside 100% polycarbonate card body.

The goal was achieved in such a manner that a personal security document is made as a laminate of several layers. wherein on the internal side of the external layer and/or on one or more internal layers, the document has a personalisation made and at least in one direction all layers between the personalisation and the external side of the document are transparent. The personalization is made with multi-colour solvent inkjet print and all layers of the document are made of polycarbonate

In particular, the multi-colour personalisation of the personal security document may be made with ecosolvent ink jet print.

The invention is presented in exemplary execution as follows:
Fig. 1 presents a cross-section of a document with multi-colour personalisation on the internal side of the external layer,
Fig. 2 presents a cross-section of a document with multi-colour personalisation on the internal layer adjacent to the polyurethane layer as a reference example,
Fig. 3 presents a cross-section of a document with multi-colour personalisation adjacent to the polyurethane layer on the internal layer coated with a primer as a reference example.

In all the examples of execution, personalisation was made with digital offset print, in particular with the use of solvent inkjet, ecosolvent ink jet or Indygo technique print. In order to improve legibility of the drawing, the individual layers of the document were moved apart and shown disproportionately in relation to the actual thickness of individual layers.

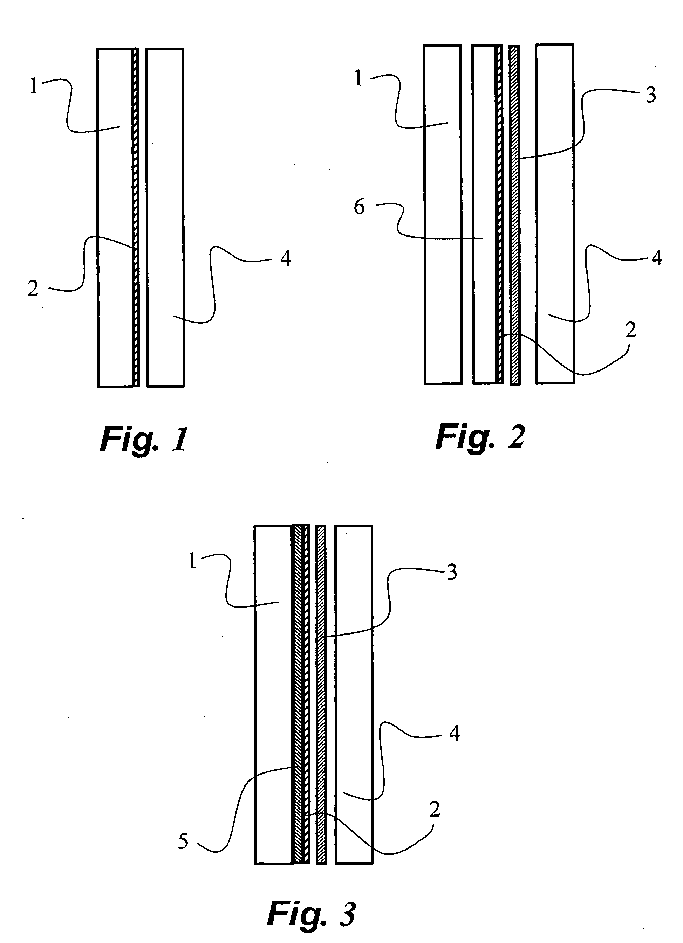

In Fig. 1 the exemplary document has two external layers 1 and 4 of polycarbonate. On the internal side of one layer 1 there is multicolour personalisation 2 made with digital offset print. One of the layers is transparent.

In Fig. 2 the exemplary document shown as a reference example has two external layers 1 and 4 of polycarbonate. Between the layers there is a layer 6 with multicolour personalisation 2 made with digital offset print. To the layer 6 on the personalisation side 2 there is a layer 3 of thermoplastic polyurethane. The external layer 4 and layer 3 of polyurethane are transparent.

In Fig. 3 the exemplary document shown as a reference example has two external layers 1 and 4 of polyurethane. One layer 1 is coated with a primer 5 on which there is the multicolour personalisation 2 made with digital offset print. To layer 1 coated with a primer 5 on the personalisation side 2 there is a layer 3 of thermoplastic polyurethane. The external layer 4 and layer 3 of polyurethane are transparent.

## Claims

1. A personal security document in the form of a laminate of several layers, wherein on the internal side of the external layer (1) and/or on one or more internal layers (6) there is a personalisation (2) made; and at least in one direction all the layers between the personalisation (2) and the external side of the document are transparent, **characterized in that** the personalization (2) is made with multi-colour solvent inkjet print and all layers of the document are made of polycarbonate.

2. The personal security document as claimed in claim 1 **characterised in that** the personalisation (2) is made with ecosolvent inkjet print.

## Patentansprüche

1. Persönliches Sicherheitsdokument in Form eines Laminats aus verschiedenen Schichten, wobei auf der Innenseite der Außenschicht (1) und/oder auf einer oder mehreren Innenschichten (6) eine Personalisierung (2) vorgenommen wird; und wobei mindestens in einer Richtung alle Schichten zwischen der Personalisierung (2) und der Außenseite des Dokuments transparent sind, **dadurch gekennzeichnet, dass** die Personalisierung (2) mit einem mehrfarbigen Solvent-Tintenstrahldrucker erfolgt und sämtliche Schichten des Dokuments aus Polycarbonat bestehen.

2. Persönliches Sicherheitsdokument nach Anspruch 1, **dadurch gekennzeichnet, dass** die Personalisierung (2) mit Eco-Solvent-Tinte für Tintenstrahldrucker erfolgt.

## Revendications

1. Une pièce d'identité sous forme d'un stratifié à plusieurs couches, sur le côté intérieur de la couche extérieure (1) et/ou sur une ou plusieurs couches intérieures (6) de laquelle une personnalisation (2) a été appliquée ; et au moins dans une direction, toutes les couches entre la personnalisation (2) et le côté extérieur de la pièce sont transparentes, **caractérisée par le fait que** la personnalisation (2) se compose d'une impression multicolore à jet d'encre solvant, et toutes les couches de la pièce sont réalisées en polycarbonate.

2. La pièce d'identité selon la revendication 1, **caractérisée par le fait que** la personnalisation (2) est réalisée avec une impression jet d'encre éco-solvant.
